# FASCICULE DE BREVET EUROPEEN

(11) **EP 3 931 163 B1**
(45) Date de publication et mention de la délivrance du brevet: **16.08.2023**
(21) Numéro de dépôt: 20719684.1
(22) Date de dépôt: 27.02.2020
(51) Int. Cl.: C03C 17/36, C03C 17/38, C03C 17/42

(54) **SUBSTRAT TRANSPARENT REVÊTU D'UNE COUCHE ORGANIQUE TRANSPARENTE INCOLORE OU COLORÉE DISCONTINUE TEXTURÉE SELON DES POINTS, ET D'UNE COUCHE RÉFLECHISSANTE**
TRANSPARENTES SUBSTRAT BESCHICHTET MIT EINER DISKONTINUIERLICHEN TRANSPARENTEN, FARBLOSEN ODER GEFÄRBTEN ORGANISCHEN SCHICHT, DIE NACH PUNKTEN TEXTURIERT IST UND MIT EINER REFLEKTIERENDEN SCHICHT ÜBERZOGEN IST
TRANSPARENT SUBSTRATE COATED WITH A DISCONTINUOUS TRANSPARENT, COLORLESS OR COLORED ORGANIC LAYER WHICH IS TEXTURED ACCORDING TO POINTS, AND COATED WITH A REFLECTIVE LAYER

(30) Priorité: 28.02.2019 FR 1902075
(43) Date de publication de la demande: 05.01.2022
(73) Titulaire: Saint-Gobain Glass France, 92400 Courbevoie (FR)
(72) Inventeur: BRUDIEU, Barbara, 75014 PARIS (FR); SCHIAVONI, Michele, 75014 PARIS (FR); CHAHBOUNE, Kamel, 02200 SOISSONS (FR); TEISSEIRE, Jérémie, 92160 ANTONY (FR)
(74) Mandataire: Saint-Gobain Recherche
(86) Numéro de dépôt international: PCT/FR2020/050391
(87) Numéro de publication internationale: WO 2020/174193

(56) Documents cités:
- WO-A1-2014/037679

## Description

L'invention a trait aux substrats transparents rigides, et particulièrement verriers, pour lesquels de nouveaux aspects visuels, esthétiques, décoratifs, sont recherchés.

Les inventeurs ont imaginé de combiner sur un substrat transparent rigide tel que le verre une couche organique imprimée qui donne au produit l'aspect plus ou moins diffus contrôlé en réflexion, revêtue d'une couche réfléchissante procurant la fonction d'un miroir. En particulier il existait un besoin pour un substrat réfléchissant combinant un ensemble de motifs décoratifs variables à volonté visibles grâce à une réflexion diffuse à angle suffisamment faible autour de l'angle de réflexion spéculaire, ce qui permet de distinguer nettement tout objet réfléchi, sans observer un aspect blanchâtre que l'on veut éviter absolument. Document WO2014037679-A1 divulgue un substrat rigide transparent; revêtu successivement d'une couche transparente incolore discontinue et texturé; d'une couche réfléchissante; et d'une couche de peinture.

A cet effet l'invention a pour objet un substrat rigide transparent revêtu successivement
- d'une couche organique transparente incolore ou colorée discontinue, comprenant des zones texturées selon des points pᵢ (i = 1, 2...), et organisées en motifs macroscopiques qui ont des aspects visuels différents les uns des autres, les points pᵢ ayant une surface Sᵢ, un diamètre Dᵢ défini comme le diamètre du cercle qui a la surface Sᵢ, un centre Cᵢ défini comme le barycentre de Sᵢ, une période Pᵢ définie comme la distance moyenne du centre Cᵢ au centre des points qui sont les plus proches voisins du point pᵢ, définis par triangulation de Delaunay, la surface entre les points pᵢ étant plane et l'aspect des motifs macroscopiques étant déterminé par une valeur spécifique de la moyenne des périodes Pᵢ, appelée période moyenne P et de la moyenne des diamètres Dᵢ, appelée diamètre moyen D, des points pᵢ du motif macroscopique ;
- d'une couche réfléchissante; et
- d'une couche de peinture d'épaisseur comprise entre 1 et 100 µm, protectrice vis-à-vis de la corrosion et l'oxydation entre autres.

La couche réfléchissante procure la fonction d'un miroir du côté du substrat opposé à la face revêtue de la couche organique.

La couche protectrice est opaque ou transparente et peut consister en une peinture organique et/ou minérale.

La couche organique comprend des points dont la forme peut être plus ou moins proche de celle de demi-sphères, notamment aplaties par rapport à celles-ci, de hauteurs Hᵢ pouvant être aussi petites qu'1/10 de Dᵢ, mais Hᵢ est au plus égale à Dᵢ, ou ovoïdale, ou polygonale, pouvant présenter des surfaces concaves, par exemple du type à section transversale en étoile... Dans les zones texturées à points, la couche organique présente une discontinuité entre les points, c'est-à-dire une épaisseur nulle, ou une épaisseur très petite par rapport à la hauteur des points, jusqu'à 1/10 ème de la hauteur Hᵢ des points pᵢ, pourvu que sa surface soit plane.

Les points peuvent être ordonnés selon une périodicité dans une ou plusieurs dimensions, notamment dans un motif macroscopique, ou non. Dans ce cas, les périodes Pᵢ et les diamètres Dᵢ de tous les points pᵢ d'un motif macroscopique, par exemple, peuvent être identiques, égaux à la période moyenne P, respectivement au diamètre moyen D.

Lesdits motifs macroscopiques sont visibles en réflexion du côté du substrat opposé à la face revêtue de la couche organique. Lorsque la valeur du rapport du diamètre moyen D sur la période moyenne P des points décroît, c'est-à-dire lorsque le taux de recouvrement des points sur la surface décroît, l'intensité de la réflexion diffuse à faible angle (par rapport au rayon de réflexion spéculaire) décroît également, et la proportion de réflexion spéculaire croît corrélativement à la surface plane interstitielle entre les points. Le taux de recouvrement des points est défini comme la proportion recouverte de points pᵢ d'une surface considérée, c'est-à-dire le quotient de la somme des surfaces Sᵢ sur cette surface considérée. Inversement, quand le rapport du diamètre moyen D sur la période moyenne P des points croît, c'est-à-dire lorsque le taux de recouvrement des points sur la surface croît, l'intensité de la réflexion diffuse à faible angle autour du rayon de réflexion spéculaire augmente.

Ainsi, selon l'invention, en contrôlant localement les valeurs des périodes moyennes P et diamètres moyens D des points selon des motifs macroscopiques; on produit un effet décoratif spécifique en réflexion, les motifs macroscopiques résultant d'intensités différentes contrôlées de la réflexion diffuse à faible angle. Par rapport aux substrats connus à l'heure actuelle, celui de l'invention diffuse en réflexion à petits angles, évitant un aspect blanchâtre désagréable et inesthétique en réflexion. L'aspect blanchâtre est dans l'état de la technique la manifestation de valeurs relativement élevées du flou et de la réflexion diffuse à larges angles ; grâce à l'invention, ces valeurs sont suffisamment faibles pour supprimer tout aspect blanchâtre.

Que la texturation soit périodique ou non, si les valeurs de la période moyenne P et du diamètre moyen D sont les mêmes sur deux surfaces différentes, par exemple deux motifs macroscopiques distincts, leur aspect visuel en réflexion est identique. Inversement, cet aspect visuel en réflexion change en modifiant la valeur de la période moyenne P, du diamètre moyen D, ou bien des deux.

Les zones texturées de la couche organique selon l'invention sont aptes à produire une réflexion assez nette, peu diffusante. La réflexion diffuse est suffisamment faible pour permettre de distinguer assez nettement en réflexion la forme, le contour de tout objet réfléchi, reconnaître un visage...

Les motifs macroscopiques peuvent être de toutes formes: géométriques, telles que triangle. Le choix et la combinaison de ces formes, ainsi que des valeurs de la période moyenne P et du diamètre moyen D pour les motifs macroscopiques voisins permettent de produire tout aspect esthétique recherché pour l'ensemble, par exemple un effet métallique tissé en réflexion.

De préférence, le taux de recouvrement des points pᵢ dans les zones texturées, notamment dans chacun des motifs macroscopiques, est compris entre 10 et 70 % et de préférence entre 15 et 40 %, à condition que les points ne coalescent pas. S'ils coalescent, la réflexion diffuse à faible angle chute et l'effet esthétique recherché n'est plus présent. Ce taux de recouvrement est la proportion d'une surface considérée qui est recouverte de points pᵢ, c'est-à-dire le quotient de la somme des surfaces Sᵢ sur cette surface considérée.

De préférence, le taux de recouvrement des points pᵢ dans deux motifs macroscopiques adjacents varie d'au moins 5 %. L'aspect visuel de ces deux motifs macroscopiques s'en trouve d'autant différencié.

De préférence, les points pᵢ ont des hauteurs Hᵢ comprises entre 10 nm et 100 µm, des périodes Pᵢ comprises entre 10 et 500 µm et des diamètres Dᵢ compris entre 10 et 500 µm.

De manière particulièrement préférée, lesdits points pᵢ sont de hauteurs Hᵢ comprises entre 1 et 20 µm, de périodes Pᵢ comprises entre 100 et 300 µm et de diamètres Dᵢ compris entre 30 et 300 µm.

Dans une réalisation particulière, la couche organique transparente incolore ou colorée discontinue comprend des zones non texturées ayant chacune une épaisseur constante comprise entre 0 et 50 µm d'épaisseur ; les zones non texturées produisent une réflexion spéculaire qui, associée à la réflexion à travers les zones voisines texturées selon l'invention, participe à l'effet décoratif en rendant visibles des motifs voulus.

Dans une autre réalisation particulière n'excluant pas la précédente, au moins deux motifs macroscopiques et/ou zones non texturées sont délimités par une ou plusieurs lignes parallèles formée(s) par un dépôt homogène non texturé de vernis, chacune de largeur du même ordre que le diamètre moyen D, l'écartement entre deux lignes voisines étant aussi du même ordre que le diamètre moyen D. Ces lignes produisent une brillance contrastée avec la diffusion entre deux zones de points différentes (telles que deux motifs macroscopiques), ou bien entre un motif macroscopique et une zone non texturée de la couche organique.

De préférence, le substrat rigide transparent consiste en verre tel que sodocalcique, aluminosilicate, borosilicate.

Avantageusement, la couche organique est choisie parmi un polymère thermoplastique dissous dans un solvant, tel que polystyrène, ou en émulsion dans un solvant, tel que latex acrylique, un polymère thermodurcissable durci par voie thermique, tel que époxy, polyuréthane, polyester, acrylique, mélamine, un polymère thermodurcissable réticulable par ultraviolet, tel qu'acrylate et dérivés du type époxyacrylate, polyester acrylate, polyuréthane acrylate, époxy cationique, une composition polyvinylpyrrolidone + EDTA, polyamide, polyvinylbutyral, résine photosensible positive de type diazonaphtoquinone-novolaque, tout matériau organique réticulé sous rayonnement ultraviolet ou infrarouge, ou thermoréticulable, seul(e) ou en mélanges ou copolymères à blocs ou greffés de plusieurs d'entre eux (elles).

De préférence, la couche réfléchissante est choisie parmi
- une couche comprenant un métal tel qu'argent, chrome, aluminium, et/ou un oxyde à haut indice tel que TiO₂, ZrO₂ ;
- une couche d'argent d'épaisseur comprise entre 1 nm et 1 µm, de préférence entre 10 et 100 nm telle qu'obtenue par oxydoréduction ;
- une couche métallisée déposée par sérigraphie, telle qu'une encre miroir / à effet métallique commercialisée par la Société Pröll KG sous la référence Mirror Ink M3, ou par la Société Tiflex (Poncin, France) commercialisée sous la référence 3Y2656, ou encore par la Société Marabu GmbH & Co. KG commercialisée sous la marque enregistrée référence Mara^{®} Chrome MC ; un vernis de protection (vendu par ces mêmes Sociétés) ou une peinture de protection doit être appliquée pour une bonne résistance à la rayure;
- une peinture métallique telle qu'une peinture à effet acier inoxydable, or ou cuivre, déposée sous forme liquide telle que par rideau ;
- un empilement de couches minces, notamment tel que commercialisé par la Société Saint-Gobain Glass sous la marque enregistrée Mirastar^{®} et/ou décrit dans le brevet EP 0 962 429 B1, obtenu par pulvérisation cathodique assistée par magnétron, pouvant comprendre une couche de base diélectrique, une couche métallique réfléchissante à base de Cr ou d'un alliage contenant du chrome, et une couche de recouvrement extérieure en diélectrique, d'épaisseur totale comprise entre 30 et 100 nm, empilement pouvant être revêtu d'une couche opacifiante ;
seul (e) ou en mélange de plusieurs d'entre eux (elles).

Un autre objet de l'invention consiste en un procédé de fabrication d'un substrat rigide tel que décrit ci-dessus, caractérisé en ce qu'il comprend les opérations consistant à déposer successivement sur un substrat rigide transparent
- une couche organique texturée à partir d'une composition liquide dans un solvant ou dans l'eau, ou à partir d'une composition solide, ayant le cas échéant une viscosité comprise entre 0,005 et 100, de préférence 0,5 et 5 Pa.s, une rhéologie newtonienne ou rhéo-fluidifiante, pouvant comprendre au moins un photoinitiateur et/ou au moins un promoteur d'adhésion tel que phosphate acrylate ou silyl acrylate, puis en exposant la couche organique à un rayonnement ultraviolet ou infrarouge ou à un chauffage ;
- une couche réfléchissante par un procédé d'oxydoréduction spray (connu sous les termes anglais « electroless plating ») ou par un procédé équivalent et/ou sérigraphie et/ou dépôt voie liquide tel que rideau et/ou pulvérisation cathodique assistée par magnétron ; et
- une couche de peinture protectrice par un procédé par voie liquide tel que par rideau ou pulvérisation,

La couche organique peut être transparente incolore ou colorée, réticulée sous illumination UV ou séchage IR.

La couche réfléchissante apporte la propriété miroir au produit.

Le dépôt de la couche organique texturée est effectué de préférence par impression, telle qu'au rouleau, par flexographie, impression digitale du type jet d'encre ou sublimation, ou par sérigraphie.

L'invention a également pour objet l'application du substrat rigide décrit ci-dessus pour la décoration intérieure ou extérieure comme paroi, surface de meuble.

Les dessins annexés illustrent l'invention :

La figure 1 représente schématiquement en coupe, un substrat rigide transparent conforme à l'invention,

La figure 2 représente schématiquement la réflexion spéculaire de lumière visible sur un miroir parfait.

La figure 3 représente schématiquement la réflexion de lumière visible sur un substrat rigide selon l'invention,

La figure 4 représente schématiquement la réflexion de lumière visible sur un substrat de l'état de la technique, tel que représenté par exemple par la demande WO 2014 037679 A1.

La figure 5 est une vue de face d'un substrat rigide de l'invention vu du côté opposé à la face revêtue de la couche organique.

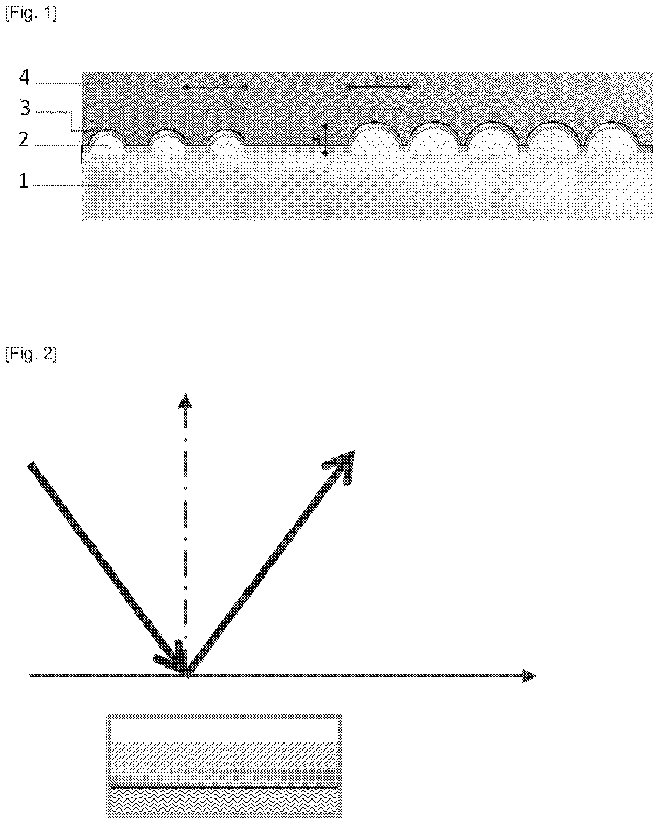

En référence à la figure 1, un substrat rigide conforme à l'invention comprend un substrat rigide transparent 1 en verre sodocalcique flotté de 4 mm d'épaisseur, commercialisé par la Société Saint-Gobain Glass sous la marque enregistrée Planiclear^{®}, successivement revêtu
- d'une couche organique 2 transparente dont la nature sera précisée dans la suite, texturée selon des points de hauteurs comprises entre 1 et 20 µm, de périodes comprises entre 100 et 300 µm et de diamètres compris entre 30 et 300 µm ;
- d'une couche d'argent réfléchissante 3 d'épaisseur comprise entre 1 nm et 1 µm ; et
- d'une couche de peinture 4 d'épaisseur comprise entre 1 et 100 µm, protectrice vis-à-vis de la corrosion et l'oxydation entre autres.

La période des points a une valeur constante de P, tandis que peuvent être distinguées deux zones : une où la valeur du diamètre des points est constamment égale à D, et l'autre où elle est constamment égale à D'.

D est plus grand que D ; avec une période P identique dans les deux zones, celles-ci se distinguent visuellement en réflexion l'une de l'autre par une intensité de la réflexion diffuse à faible angle plus grande dans la zone de points plus grands. Les contours des deux zones sont formés de manière à produire un effet décoratif désiré.

Le tableau 1 ci-dessous décrit les formulations de trois couches organiques transparentes A, B et C.

**[Table 1]**

| Formulation % en poids | A | B | C |
|---|---|---|---|
| CN9276 | | | 56,10 |
| CN9010 | 56,10 | 46,10 | |
| CN9001 | | 10 | |
| SR833S | 16,84 | 16,84 | 16,84 |
| SR351 | 16,84 | 16,84 | |
| SR238 | | | 16,84 |
| SR9054 | 5,16 | 5,15 | 5,15 |
| SpeedCure^{®} | 5,10 | 5,10 | 5,10 |
| Viscosité Pa.s | 1 | 2 | 0,2 |

| | | | |
|---|---|---|---|
| SpeedCure^{®} (ou Irgacure^{®}) : photoinitiateur. Composés commercialisés par la Société Sartomer : CN9276 et 9010 : oligomère uréthane hexaacrylate aliphatique ; CN9001 : oligomère uréthane diacrylate aliphatique ; SR833S : Tricyclodécanediméthanol Diacrylate (TCDDMDA) ; SR351 : Triméthylolpropane Triacrylate (TMPTA) ; SR238 : 1,6 Hexanediol Diacrylate (HDDA) ; SR9054 : promoteur d'adhésion Phosphate méthacrylate acide. | | | |

La couche organique 2 texturée selon des points (demi-sphères) est formée par sérigraphie.

La couche d'argent réfléchissante 3 est d'épaisseur comprise entre 70 et 80 nm ; elle est formée par oxydoréduction (procédé connu sous les termes anglais « electroless plating »).

La couche de peinture 4 est déposée par rideau.

Sur la figure 2, le miroir réfléchit un rayon incident de lumière dans une direction unique, symétrique du rayon incident par rapport à la normale à la surface du miroir.

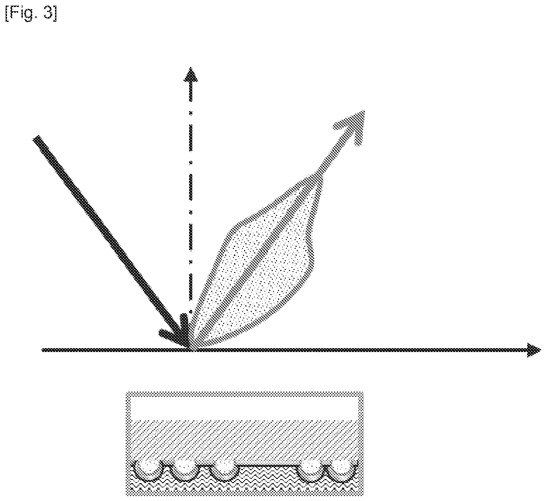

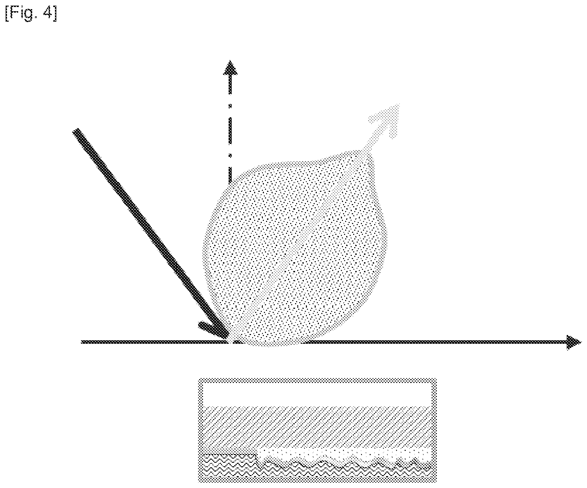

En comparant les figures 3 et 4, le substrat réfléchissant de l'invention (figure 3) réfléchit le rayon incident de lumière dans un ensemble de directions beaucoup plus réduit et resserré autour de la direction du rayon de réflexion spéculaire de la figure 2 que le substrat de la figure 4. La lumière réfléchie par le substrat rigide de l'invention est beaucoup moins diffuse que celle réfléchie par le substrat de la figure 4. Contrairement à ce dernier, le substrat de l'invention permet de distinguer nettement la forme des objets réfléchis, reconnaître un visage par exemple. De plus il est apte à produire un effet décoratif selon des motifs, tel qu'évoquant par exemple le métal tissé.

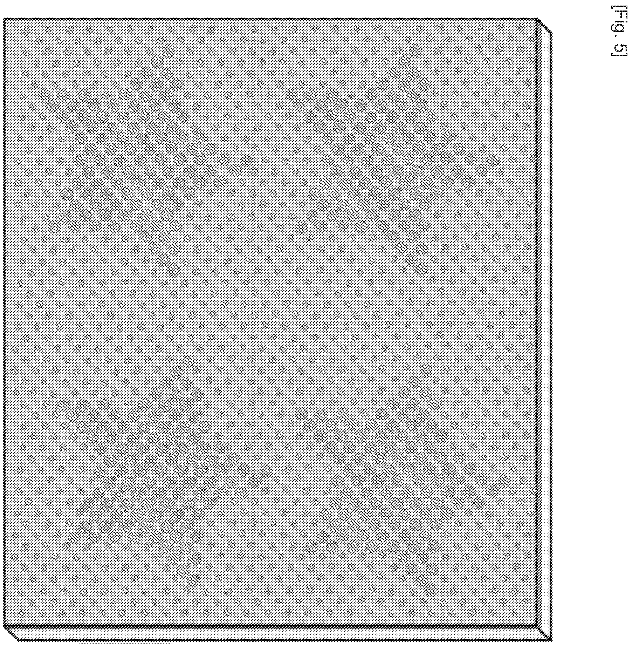

La figure 5 représente un substrat selon l'invention à motifs macroscopiques en forme d'étoiles. Sur toute la surface du substrat les points sont disposés selon la même période. A l'intérieur des motifs macroscopiques d'une part, dans les surfaces entre ceux-ci d'autre part, les points ont des diamètres uniformes, mais ces diamètres sont plus grands à l'intérieur des étoiles qu'à l'extérieur. Par conséquent, à l'intérieur des étoiles, l'intensité de la réflexion diffuse à faible angle autour du rayon de réflexion spéculaire est plus importante qu'entre les étoiles, ce qui est perceptible à l'œil et produit un effet décoratif. Toute image réfléchie dans ce substrat est nette, que ce soit entre les motifs macroscopiques ou dans ceux-ci. Le diamètre du cercle de même surface que celle d'une étoile varie de quelques millimètres à quelques centimètres par exemple.

## Revendications

1. Substrat rigide transparent (1) revêtu successivement
- d'une couche organique (2) transparente incolore ou colorée discontinue, comprenant des zones texturées selon des points p; (i = 1, 2...), et organisées en motifs macroscopiques qui ont des aspects visuels différents les uns des autres, les points pᵢ ayant une surface Sᵢ, un diamètre Dᵢ défini comme le diamètre du cercle qui a la surface Sᵢ, un centre Cᵢ défini comme le barycentre de Sᵢ, une période Pᵢ définie comme la distance moyenne du centre Cᵢ au centre des points qui sont les plus proches voisins du point pᵢ, définis par triangulation de Delaunay, la surface entre les points pᵢ étant plane et l'aspect des motifs macroscopiques étant déterminé par une valeur spécifique de la moyenne des périodes Pᵢ, appelée période moyenne P et de la moyenne des diamètres Dᵢ, appelée diamètre moyen D, des points pᵢ du motif macroscopique ;
- d'une couche réfléchissante (3); et
- d'une couche de peinture (4) d'épaisseur comprise entre 1 et 100 µm, protectrice vis-à-vis de la corrosion et l'oxydation entre autres.

2. Substrat rigide selon la revendication 1, **caractérisé en ce que** le taux de recouvrement des points pᵢ dans les zones texturées, notamment dans chacun des motifs macroscopiques, est compris entre 10 et 70 % et de préférence entre 15 et 40 % à condition que les points ne coalescent pas.

3. Substrat rigide selon l'une des revendications précédentes, **caractérisé en ce que** le taux de recouvrement des points pᵢ dans deux motifs macroscopiques adjacents varie d'au moins 5 %.

4. Substrat rigide selon l'une des revendications précédentes, **caractérisé en ce que** les points pᵢ ont des hauteurs Hᵢ comprises entre 10 nm et 100 µm, des périodes Pᵢ comprises entre 10 et 500 µm et des diamètres Di compris entre 10 et 500 µm.

5. Substrat rigide selon l'une des revendications précédentes, **caractérisé en ce que** les points pᵢ ont des hauteurs Hᵢ comprises entre 1 et 20 µm.

6. Substrat rigide selon l'une des revendications précédentes, **caractérisé en ce que** les points pᵢ ont des périodes Pᵢ comprises entre 100 et 300 µm.

7. Substrat rigide selon l'une des revendications précédentes, **caractérisé en ce que** les points pᵢ ont des diamètres Dᵢ compris entre 30 et 300 µm.

8. Substrat rigide selon l'une des revendications précédentes, **caractérisé en ce que** la couche organique transparente incolore ou colorée discontinue comprend des zones non texturées ayant chacune une épaisseur constante comprise entre 0 et 50 µm d'épaisseur.

9. Substrat rigide selon l'une des revendications 1 à 7 ou 8, **caractérisé en ce qu'**au moins deux motifs macroscopiques et/ou zones non texturées sont délimités par une ou plusieurs lignes parallèles formée(s) par un dépôt homogène non texturé de vernis, chacune de largeur du même ordre que le diamètre moyen D, l'écartement entre deux lignes voisines étant aussi du même ordre que le diamètre moyen D.

10. Substrat rigide selon l'une des revendications précédentes, **caractérisé en ce qu'**il consiste en verre tel que sodocalcique, aluminosilicate, borosilicate.

11. Substrat rigide selon l'une des revendications précédentes, **caractérisé en ce que** la couche organique (2) est choisie parmi un polymère thermoplastique dissous dans un solvant, tel que polystyrène, ou en émulsion dans un solvant, tel que latex acrylique, un polymère thermodurcissable durci par voie thermique, tel que époxy, polyuréthane, polyester, acrylique, mélamine, un polymère thermodurcissable réticulable par ultraviolet, tel qu'acrylate et dérivés du type époxyacrylate, polyester acrylate, polyuréthane acrylate, époxy cationique, une composition polyvinylpyrrolidone + EDTA, polyamide, polyvinylbutyral, résine photosensible positive de type diazonaphtoquinone-novolaque, tout matériau organique réticulé sous rayonnement ultraviolet ou infrarouge, ou thermoréticulable, seul(e) ou en mélanges ou copolymères à blocs ou greffés de plusieurs d'entre eux (elles).

12. Substrat rigide selon l'une des revendications précédentes, **caractérisé en ce que**, la couche réfléchissante est choisie parmi
- une couche comprenant un métal tel qu'argent, chrome, aluminium, et/ou un oxyde à haut indice tel que TiO₂, ZrO₂;
- une couche d'argent d'épaisseur comprise entre 1 nm et 1µm, de préférence entre 10 et 100 nm telle qu'obtenue par oxydoréduction ;
- une couche métallisée déposée par sérigraphie, telle qu'une encre miroir / à effet métallique;
- une peinture métallique telle qu'une peinture à effet acier inoxydable, or ou cuivre, déposée sous forme liquide telle que par rideau ;
- un empilement de couches minces obtenu par pulvérisation cathodique assistée par magnétron, pouvant comprendre une couche de base diélectrique, nécessairement une couche métallique réfléchissante à base de Cr ou d'un alliage contenant du chrome, et une couche de recouvrement extérieure en diélectrique, d'épaisseur totale comprise entre 30 et 100 nm, empilement pouvant être revêtu d'une couche opacifiante ;
- seul(e) ou en mélange de plusieurs d'entre eux (elles).

13. Procédé de fabrication d'un substrat rigide selon l'une des revendications précédentes, **caractérisé en ce qu'**il comprend les opérations consistant à déposer successivement sur un substrat rigide transparent (1)
- une couche organique (2) texturée à partir d'une composition liquide dans un solvant ou dans l'eau, ou à partir d'une composition solide, ayant le cas échéant une viscosité comprise entre 0,005 et 100, de préférence 0,5 et 5 Pa.s, une rhéologie newtonienne ou rhéo-fluidifiante, pouvant comprendre au moins un photoinitiateur et/ou au moins un promoteur d'adhésion tel que phosphate acrylate ou silyl acrylate, puis en exposant la couche organique à un rayonnement ultraviolet ou infrarouge ou à un chauffage ;
- une couche réfléchissante (3) par un procédé d'oxydoréduction ou équivalent et/ou sérigraphie et/ou dépôt voie liquide tel que rideau et/ou pulvérisation cathodique assistée par magnétron ; et
- une couche de peinture (4) protectrice par un procédé par voie liquide tel que par rideau ou pulvérisation.

14. Procédé de fabrication d'un substrat rigide selon la revendication 13, **caractérisé en ce que** le dépôt de la couche organique (2) texturée est effectué par impression, telle qu'au rouleau, par flexographie, impression digitale du type jet d'encre ou sublimation, ou par sérigraphie.

15. Application d'un substrat rigide selon l'une des revendications 1 à 12 pour la décoration intérieure ou extérieure comme paroi, surface de meuble.

## Patentansprüche

1. Transparentes starres Substrat (1), aufeinanderfolgend beschichtet:
- mit einer diskontinuierlichen farblosen oder gefärbten transparenten organischen Schicht (2), umfassend texturierte Zonen gemäß Punkten pᵢ (i = 1, 2...) und die zu makroskopischen Mustern organisiert sind, die visuelle Aspekte besitzen, die sich voneinander unterscheiden, wobei die Punkte pᵢ eine Oberfläche Sᵢ, einen Durchmesser Dᵢ, der als der Durchmesser des Kreises definiert ist, der die Oberfläche Sᵢ besitzt, eine Mitte Cᵢ, die als der Massenmittelpunkt von Sᵢ definiert ist, eine Periode Pᵢ, die als der mittlere Abstand von der Mitte Cᵢ zu der Mitte der Punkte definiert ist, die die nächsten Nachbarn des Punkts pᵢ sind, die durch Delaunay-Triangulierung definiert sind, besitzen, wobei die Oberfläche zwischen den Punkten pᵢ eben ist und der Aspekt der makroskopischen Muster durch einen spezifischen Wert des Mittelwerts der Perioden Pᵢ, genannt mittlere Periode P, und des Mittelwerts der Durchmesser Dᵢ, genannt mittlerer Durchmesser D, der Punkte pᵢ des makroskopischen Musters bestimmt ist;
- mit einer reflektierenden Schicht (3); und
- mit einer Anstrichschicht (4) mit Dicke zwischen 1 und 100 µm, die unter anderem gegenüber Korrosion und Oxidation schützt.

2. Starres Substrat nach Anspruch 1, **dadurch gekennzeichnet, dass** der Bedeckungsgrad der Punkte pᵢ in den texturierten Zonen, insbesondere in jedem der makroskopischen Muster, zwischen 10 und 70 % und vorzugsweise zwischen 15 und 40 % liegt, vorausgesetzt, dass die Punkte nicht koaleszieren.

3. Starres Substrat nach einem der vorstehenden Ansprüche, **dadurch gekennzeichnet, dass** der Bedeckungsgrad der Punkte pᵢ in zwei angrenzenden makroskopischen Mustern um mindestens 5 % variiert.

4. Starres Substrat nach einem der vorstehenden Ansprüche, **dadurch gekennzeichnet, dass** die Punkte pᵢ Höhen Hᵢ zwischen 10 nm und 100 µm, Perioden Pᵢ zwischen 10 und 500 µm und Durchmesser Dᵢ zwischen 10 und 500 µm besitzen.

5. Starres Substrat nach einem der vorstehenden Ansprüche, **dadurch gekennzeichnet, dass** die Punkte pᵢ Höhen Hᵢ zwischen 1 und 20 µm besitzen.

6. Starres Substrat nach einem der vorstehenden Ansprüche, **dadurch gekennzeichnet, dass** die Punkte pᵢ Perioden Pᵢ zwischen 100 und 300 µm besitzen.

7. Starres Substrat nach einem der vorstehenden Ansprüche, **dadurch gekennzeichnet, dass** die Punkte pᵢ Durchmesser Dᵢ zwischen 30 und 300 µm besitzen.

8. Starres Substrat nach einem der vorstehenden Ansprüche, **dadurch gekennzeichnet, dass** die diskontinuierliche farblose oder gefärbte transparente organische Schicht nicht texturierte Zonen umfasst, die jeweils eine konstante Dicke zwischen 0 und 50 µm Dicke besitzen.

9. Starres Substrat nach einem der Ansprüche 1 bis 7 oder 8, **dadurch gekennzeichnet, dass** mindestens zwei makroskopische Muster und/oder nicht texturierte Zonen durch eine oder mehrere parallele Linien begrenzt sind, die durch eine nicht texturierte homogene Lackabscheidung ausgebildet ist/sind, die jeweils eine Breite derselben Größenordnung wie der mittlere Durchmesser D vorweisen, wobei der Zwischenraum zwischen zwei benachbarten Linien auch von derselben Größenordnung wie der mittlere Durchmesser D ist.

10. Starres Substrat nach einem der vorstehenden Ansprüche, **dadurch gekennzeichnet, dass** es aus Glas wie Natronkalk, Aluminiumsilicat, Borosilicat besteht.

11. Starres Substrat nach einem der vorstehenden Ansprüche, **dadurch gekennzeichnet, dass** die organische Schicht (2) ausgewählt ist aus einem thermoplastischen Polymer, das in einem Lösungsmittel, wie zum Beispiel Polystyrol, oder in Emulsion in einem Lösungsmittel aufgelöst ist, wie zum Beispiel Acryllatex, einem auf thermischem Weg ausgehärteten duroplastischen Polymer, wie zum Beispiel Epoxid, Polyurethan, Polyester, Acryl, Melamin, einem durch Ultraviolett vernetzbaren duroplastischen Polymer, wie zum Beispiel Acrylat und Derivaten von der Art Epoxyacrylat, Polyesteracrylat, Polyurethanacrylat, kationisches Epoxid, einer Polyvinylpyrrolidonzusammensetzung + EDTA, Polyamid, Polyvinylbutyral, positivem lichtempfindlichem Harz der Art Diazonaphtochinon-Novolak, wobei das gesamte organische Material unter Ultraviolett- oder Infrarotstrahlung vernetzt wird oder thermisch vernetzbar ist, allein(e) oder in Mischungen oder Block- oder Pfropfcopolymeren von mehreren davon.

12. Starres Substrat nach einem der vorstehenden Ansprüche, **dadurch gekennzeichnet, dass** die reflektierende Schicht ausgewählt ist aus
- einer Schicht, umfassend ein Metall wie zum Beispiel Silber, Chrom, Aluminium und/oder ein Oxid mit hohem Index wie zum Beispiel TiO₂, ZrO₂;
- einer Silberschicht mit Dicke zwischen 1 nm und 1 µm, vorzugsweise zwischen 10 und 100 nm, wie durch Oxidationsreduktion erhalten;
- einer metallisierten Schicht, die durch Siebdruck abgeschieden wird, wie zum Beispiel eine Spiegeltinte / mit metallischem Effekt;
- einem metallischen Anstrich, wie zum Beispiel einem Anstrich mit Edelstahl-, Gold- oder Kupfereffekt, der in flüssiger Form abgeschieden wird, wie zum Beispiel durch einen Vorhang;
- einem Stapel dünner Schichten, der durch Kathodenzerstäubung erhalten wird, die durch ein Magnetron unterstützt wird, der eine Schicht auf dielektrischer Basis, notwendigerweise eine reflektierende Metallschicht auf Basis von Cr oder einer chromhaltigen Legierung, und eine Außenbedeckungsschicht aus einem Dielektrikum mit Gesamtdicke zwischen 30 und 100 nm umfassen kann, wobei der Stapel mit einer Trübungsschicht beschichtet sein kann;
- allein oder in Mischung aus mehreren davon.

13. Verfahren zum Herstellen eines starren Substrats nach einem der vorstehenden Ansprüche, **dadurch gekennzeichnet, dass** es Abläufe umfasst, die aus dem aufeinanderfolgenden Abscheiden auf ein transparentes starres Substrat (1) bestehen von:
- einer texturierten organischen Schicht (2) aus einer flüssigen Zusammensetzung in einem Lösungsmittel oder in Wasser, oder aus einer festen Zusammensetzung, die gegebenenfalls eine Viskosität zwischen 0,005 und 100, vorzugsweise zwischen 0,5 und 5 Pa.s, eine newtonsche oder rheofluidisierende Rheologie besitzt, die mindestens einen Photoinitiator und/oder mindestens einen Haftförderer wie zum Beispiel Phosphatacrylat oder Silylacrylat umfassen kann, dann indem die organische Schicht einer Ultraviolett- oder Infrarotstrahlung oder einer Erhitzung ausgesetzt wird;
- einer reflektierenden Schicht (3) durch ein Oxidationsreduktionsverfahren oder ähnliches und/oder Siebdruck und/oder eine Abscheidung auf flüssigem Weg wie zum Beispiel der Vorhang und/oder Kathodenzerstäubung, die durch das Magnetron unterstützt wird; und
- einer schützenden Anstrichschicht (4) durch ein Verfahren auf flüssigem Weg wie zum Beispiel durch den Vorhang oder die Zerstäubung.

14. Verfahren zum Herstellen eines starren Substrats nach Anspruch 13, **dadurch gekennzeichnet, dass** das Abscheiden der texturierten organischen Schicht (2) durch Drucken, wie zum Beispiel mit einer Walze, durch Flexodruck, digitales Drucken der Tintenstrahlart oder Sublimation oder durch Siebdruck erfolgt.

15. Anwendung eines starren Substrats nach einem der Ansprüche 1 bis 12 für die Innen- oder Außendekoration als Wand, Möbeloberfläche.

## Claims

1. A transparent rigid substrate (1) successively coated
- with a discontinuous colorless or colored transparent organic layer (2), comprising zones textured with dots pᵢ (i = 1, 2, etc.), and organized in macroscopic patterns which have visual appearances different than one another, the dots pᵢ having an area Sᵢ, a diameter Dᵢ defined as the diameter of the circle which has the area Sᵢ, a center Cᵢ defined as the barycenter of Sᵢ, a period Pᵢ defined as the mean distance from the center Cᵢ to the center of the dots which are the closest neighbors to the dot pᵢ, defined by Delaunay triangulation, the area between the dots pᵢ being planar and the appearance of the macroscopic patterns being determined by a specific value of the mean of the periods Pᵢ, called mean period P and the mean of the diameters Dᵢ, called mean diameter D, of the dots pᵢ of the macroscopic pattern;
- with a reflective layer (3); and
- with a layer of paint (4) between 1 and 100 µm thick, which is protective against corrosion and oxidation, *inter alia.*

2. The rigid substrate as claimed in claim 1, **characterized in that** the degree of coverage of the dots pᵢ in the textured zones, in particular in each of the macroscopic patterns, is between 10 and 70% and preferably between 15 and 40%, provided that the dots do not coalesce.

3. The rigid substrate as claimed in either of the preceding claims, **characterized in that** the degree of coverage of the dots pᵢ in two adjacent macroscopic patterns varies by at least 5%.

4. The rigid substrate as claimed in one of the preceding claims, **characterized in that** the dots pᵢ have heights Hᵢ of between 10 nm and 100 µm, periods Pᵢ of between 10 and 500 µm and diameters Dᵢ of between 10 and 500 µm.

5. The rigid substrate as claimed in one of the preceding claims, **characterized in that** the dots pᵢ have heights Hᵢ of between 1 and 20 µm.

6. The rigid substrate as claimed in one of the preceding claims, **characterized in that** the dots pᵢ have periods Pᵢ of between 100 and 300 µm.

7. The rigid substrate as claimed in one of the preceding claims, **characterized in that** the dots pᵢ have diameters Dᵢ of between 30 and 300 µm.

8. The rigid substrate as claimed in one of the preceding claims, **characterized in that** the discontinuous colorless or colored transparent organic layer comprises non-textured zones each having a constant thickness of between 0 and 50 µm.

9. The rigid substrate as claimed in one of claims 1 to 7 or 8, **characterized in that** at least two macroscopic patterns and/or non-textured areas are delimited by one or more parallel lines formed by a non-textured uniform deposit of varnish, each of the same order of width as the mean diameter D, the spacing between two neighboring lines also being of the same order as the mean diameter D.

10. The rigid substrate as claimed in one of the preceding claims, **characterized in that** it consists of glass such as soda-lime, aluminosilicate or borosilicate.

11. The rigid substrate as claimed in one of the preceding claims, **characterized in that** the organic layer (2) is chosen from a thermoplastic polymer dissolved in a solvent, such as polystyrene, or in an emulsion in a solvent, such as acrylic latex, a thermally cured thermosetting polymer, such as epoxy, polyurethane, polyester, acrylic, melamine, an ultraviolet crosslinkable thermosetting polymer, such as acrylate and derivatives of the epoxy acrylate type, polyester acrylate, polyurethane acrylate, cationic epoxy, a polyvinylpyrrolidone + EDTA composition, polyamide, polyvinylbutyral, positive photosensitive resin of diazonaphthoquinone-novolac type, any organic material which is crosslinked under ultraviolet or infrared radiation, or thermo-crosslinkable, alone or as mixtures, or block or graft copolymers of several of them.

12. The rigid substrate as claimed in one of the preceding claims, **characterized in that** the reflective layer is chosen from
- a layer comprising a metal such as silver, chromium or aluminum, and/or a high index oxide such as TiO₂ or ZrO₂;
- a layer of silver with a thickness of between 1 nm and 1 µm, preferably between 10 and 100 nm, as obtained by oxidation-reduction;
- a metallized layer deposited by screen printing, such as a mirror/metallic-effect ink;
- a metallic paint such as a stainless steel-effect, gold-effect or copper-effect paint, deposited in liquid form such as by curtain coating;
- a stack of thin layers, obtained by magnetron sputtering, which may comprise a dielectric base layer, necessarily a reflective metallic layer based on Cr or on a chrome-containing alloy, and an exterior dielectric covering layer, of total thickness between 30 and 100 nm, which stack can be coated with an opacifying layer;
alone or as a mixture of several of them.

13. A method for manufacturing a rigid substrate as claimed in one of the preceding claims, **characterized in that** it comprises the operations consisting in successively depositing on a transparent rigid substrate (1)
- an organic layer (2) textured using a liquid composition in a solvent or in water, or using a solid composition, having where appropriate a viscosity of between 0.005 and 100, preferably 0.5 and 5 Pa.s, a Newtonian or shear-thinning rheology, which may comprise at least one photoinitiator and/or at least one adhesion promoter such as phosphate acrylate or silyl acrylate, then exposing the organic layer to ultraviolet or infrared radiation or to heating;
- a layer that is reflective (3) by means of an oxidation-reduction process or equivalent and/or screen printing and/or liquid deposition such as curtain coating and/or magnetron sputtering; and
- a layer of paint (4) that is protective by means of a liquid process such as by curtain coating or spray coating.

14. The method for manufacturing a rigid substrate as claimed in claim 13, **characterized in that** the deposition of the textured organic layer (2) is carried out by printing, such as with a roller, by flexography, digital printing of the inkjet or sublimation type, or by screen printing.

15. The application of a rigid substrate as claimed in one of claims 1 to 12, for interior or exterior decoration such as a wall, furniture surface.
